(19) Europäisches Patentamt
European Patent Office
Office européen des brevets

(11) **EP 1 724 947 A1**

(12) **EUROPEAN PATENT APPLICATION**
published in accordance with Art. 158(3) EPC

(43) Date of publication:
**22.11.2006 Bulletin 2006/47**

(21) Application number: **04717831.4**

(22) Date of filing: **05.03.2004**

(51) Int Cl.:
***H04B 7/26*** *(2006.01)*

(86) International application number:
**PCT/JP2004/002822**

(87) International publication number:
**WO 2005/086373 (15.09.2005 Gazette 2005/37)**

(84) Designated Contracting States:
**FI NL**

(71) Applicant: **HITACHI, LTD.**
**Chiyoda-ku**
**Tokyo 100-8280 (JP)**

(72) Inventors:
- **SHIMOKAWA, Isao, Hitachi, Ltd., Central Res Lab Kokubunji-shi, Tokyo 185-8601 (JP)**
- **MIYAZAKI, Masayuki, Hitachi, Ltd. Central Res Lab Kokubunji-shi, Tokyo 185-8601 (JP)**
- **MAEKI, Akira, Hitachi, Ltd., Central Res Lab Kokubunji-shi, Tokyo 185-8601 (JP)**
- **SHIDA, Masaaki, Hitachi, Ltd., Central Res Lab Kokubunji-shi, Tokyo 185-8601 (JP)**

(74) Representative: **Strehl Schübel-Hopf & Partner**
**Maximilianstrasse 54**
**80538 München (DE)**

(54) **RADIO COMMUNICATION SYSTEM CAPABLE OF SWITCHING PROTOCOL**

(57) A wireless communication system comprising a management server, base stations, and a plurality of node terminals, wherein a wireless communication protocol to be applied is switched dynamically based on such indices as but error, packet error rate, the number of times of retransmitting packets, throughput/power consumption that may occur between each base station and nodes.

F I G . 2

INTERNET
201
SERVER
202
BS
203
BS
SIGNAL POWER
INTERFERE POWER
205
204
206
NODE 1
NODE 2
NODE 3
NOISE POWER

EP 1 724 947 A1

Printed by Jouve, 75001 PARIS (FR)

## Description

TECHNICAL FIELD

The present invention relates to an apparatus for switching among wireless communication protocols to be used between a base station and a node.

BACKGROUND ART

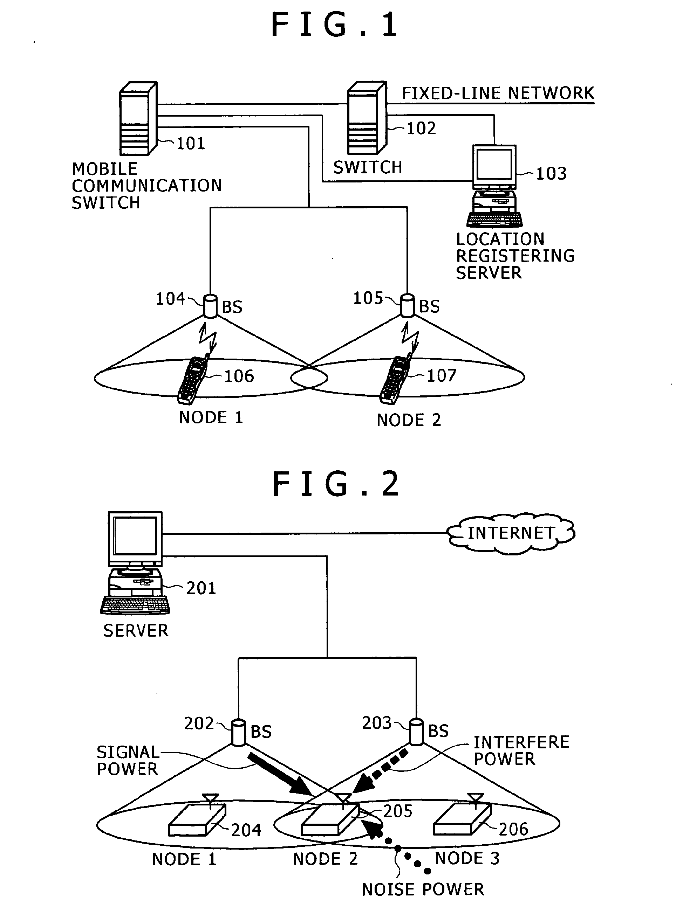

As shown in FIG. 1, a conventional general wireless communication system (mobile communication system) is comprised of a mobile communication switch 101, a switch 102, a location registering server 103, base stations (BSs) 104 and 105, and mobile terminals (nodes) 106 and 107 to be used by users. Each node is connected to a base station BS via a radio channel and each base station is connected to the mobile communication switch 101 via a wired line. To enable connection to an ordinary telephone line, the mobile communication switch 101 is connected to a fixed-line telephone network via the switch 102. Further, the location registering server 103 is connected to the mobile communication switch 101 to perform handover control between base stations upon incoming a call to each node.

In a mobile communication system, it is important in system design to determine a cellar zone and a wireless communication protocol between nodes and each base station in order to reduce radio interference between base stations and between nodes. Here, the cellar zone refers to a coverage range of node management for each base station. The cellar zone has a close relationship with a transmission power and a receiving sensitivity of each base station and nodes. In general, each base station is disposed to minimize the radio interference between the base station and neighboring base stations.

In each cellar zone, a plurality of nodes located within the zone (cell) communicate with the base station, using a predetermined wireless communication protocol. In a mobile communication system, a specific wireless communication protocol optimum for the system's requirement specifications is adopted. At present, various wireless communication protocols with which each base station performs wireless communication with a plurality of nodes are proposed. Each of these protocols has its own advantages and disadvantages. Therefore, a specific wireless communication protocol defined based on the requirement specifications does not always assure a high efficiency (high throughput and low power consumption) in various situations under which a mobile communication system has to work.

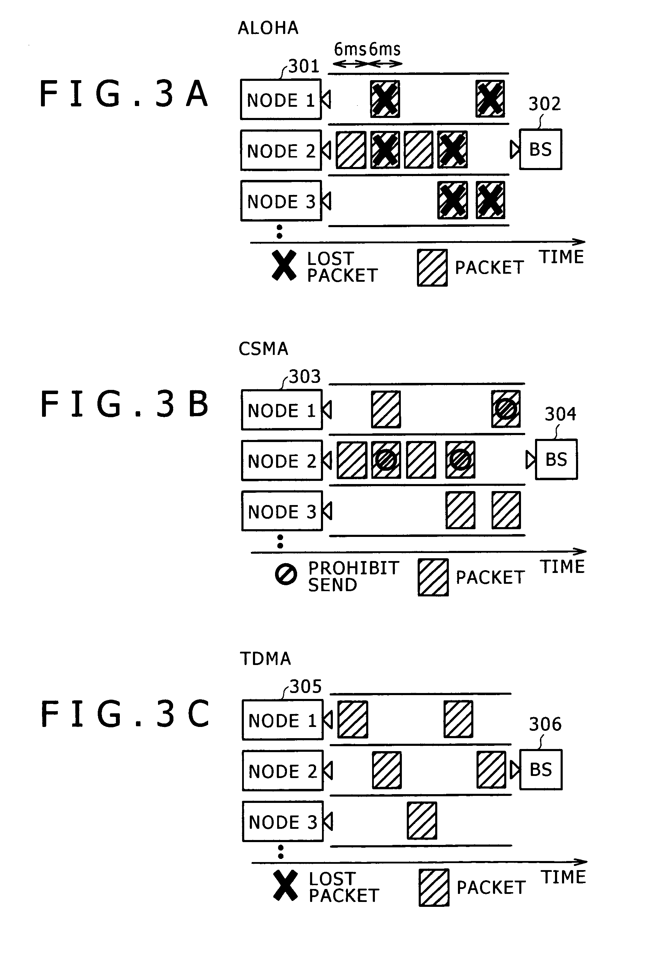

FIG. 3 illustrates the features of ALOHA, CSMA, and TDMA as typical wireless communication protocols for packet communication.

The ALOHA is a multiple access packet communication method in which a base station or a node transmits a packet immediately when a call has been originated, as illustrated in Figure (A). In the ALOHA method, as the number of nodes located in a cell increases, the probability of packet loss increases because a packet transmitted from each node will possibly collide with a packet transmitted from another node, whereby an overall throughput of the system decreases.

The CSMA is a multiple access packet communication method in which a base station or a node detects the transmission situation of packets from the other base stations or nodes by carrier sense control and determines whether to transmit a packet when a call has been originated, as illustrated in Figure (B) . Thus, a CSMA system has features of a lower probability of packet loss and a higher overall throughput of the system.

An ALOHA system does not performs the above-mentioned carrier sense control. Accordingly, the ALOHA system is lower in power consumption than the CSMA system and contributes to longer lifespan of a battery of each node, provided that power consumption for packet retransmission required when a packet loss occurs is not taken in consideration. Therefore, if the number of nodes in a cell is small, the ALOHA system is more favorable than the CSMA system in terms of power consumption. Inversely, if the number of nodes is great, the CSMA system with less packet loss is more favorable than the ALOHA system.

The TDMA is a method in which a period of communication (frame period) between a base station and nodes is divided into a plurality of time slots and the base station and each node transmit packets, using pre-allocated time slots, as illustrated in Figure (C). A TDMA system has a complex system structure because a high time precision is required as the whole system and each node must be synchronized in time with the base station so that the nodes transmit signals in time slots allocated to them. Although no packet loss occurs in the TDMA method theoretically, the TDMA system has a high overall power consumption because control signals for maintaining such a high time precision must be transmitted and received between the base station and each node.

Heretofore, proposals have been made for switching to an alternative mobile communication system having a higher efficiency of data transmission adaptively for a communication environment such as the number of nodes in a cell, noise level, or throughput, for example, in Japanese Patent Publication No. 2002-64871 and Japanese Patent Publication No. 2002-247049.

If a communication environment is evaluated only in terms of throughput, there would be no need to take account of the number of packet retransmission (retransmit count) at each node. When a packet collision occurs, if succeeded in transmission eventually by packet retransmission, the retransmit count has no influence on throughput. However, because the power consumption of a transmitting node increases if packet retransmission occurs, such evaluation only based on throughput is not proper for a mobile communication system requiring to suppress the power consumption of a node as low as possible. On the other hand, if a communication environment is evaluated only in terms of noise level, it would be difficult to determine a threshold value. Further, since control packets for confirming a noise level must be communicated, additional power is consumed in the base station and each node by transmitting and receiving the control packets.

An object of the present invention is to provide a wireless communication system that can selectively apply a wireless communication protocol adapted for the communication environment between a base station and a node device (mobile terminal).

Another object of the present invention is to provide a base station and a node device (mobile terminal) capable of switching to a wireless communication protocol to be applied according to the communication environment in a wireless communication system.

DISCLOSURE OF THE INVENTION

In order to achieve the above objects, in the present invention, a wireless communication protocol to be used for communication between a base station and node devices (mobile terminals) is selected based on a communication efficiency evaluation which will be described below. Here, "Ef" is defined in Equation (1) as an index of evaluating the efficiency of a wireless communication system.

$$\text{Ef} = \text{Overall throughput of system} / \text{Overall power consumption of system} \quad \ldots (1)$$

Ef defined by Equation (1) indicates a higher value as the overall throughput of system is higher and the overall power consumption of system is lower. In the present invention, the values of Ef are evaluated in relation to the number of nodes in each cell. The evaluated Ef values are stored beforehand in a table to be held in any of a management server, a base station, and a node, thereby to perform selective switching between or among wireless communication protocols based on the table values. Parameters that can be used to approximately evaluate the Equation (1) are, for example, retransmit count, bit error rate (BER), packet error rate (PER), etc. Thus, in actual application, selective switching between or among wireless communication protocols is performed by using these parameters.

BRIEF DESCRIPTION OF THE DRAWINGS

FIG. 1 is a schematic diagram of a conventional wireless communication system.
FIG. 2 is a schematic diagram of a wireless communication system according to the present invention.
FIG. 3 shows a set of diagrams for comparing the features of ALOHA, CSMA, and TDMA methods.
FIG. 4 shows comparison results of the overall power consumptions of the systems of ALOHA, CSMA/CA, and TDMA methods.
FIG. 5 shows comparison results of the overall throughputs of the systems of ALOHA, CSMA/CA, and TDMA methods.
FIG. 6 shows comparison results of the overall throughputs/overall power consumptions of the systems of ALOHA, CSMA/CA, and TDMA methods.
FIG. 7 shows an example of a table for protocol switching according to the number of nodes.
FIG. 8 shows an example of a table for protocol switching according to the number of nodes and the amount of data transfer per power consumption.
FIG. 9 is a structural diagram of a node device to which the present invention is applied.
FIG. 10 is a structural diagram of a base station to which the present invention is applied.
FIG. 11 is a structural diagram of a management server to which the present invention is applied.
FIG. 12 is a flowchart illustrating basic system operation of a conventional node device.
FIG. 13 is a flowchart illustrating basic system operation of a conventional base station.
FIG. 14 is a flowchart illustrating one embodiment of basic operation of a node device according to the present invention.

FIG. 15 is a flowchart illustrating another embodiment of basic operation of a node device according to the present invention.

FIG. 16 is a flowchart illustrating one embodiment of basic operation of a base station according to the present invention.

FIG. 17 is a flowchart illustrating further another embodiment of basic operation of a node device according to the present invention.

FIG. 18 is a flowchart illustrating another embodiment of basic operation of a base station according to the present invention.

FIG. 19 is a flowchart illustrating one embodiment of basic operation of a management server according to the present invention.

BEST MODE FOR CARRYING OUT THE INVENTION

Embodiments of the present invention will now be described with reference to the drawings.

In the present invention, the value Ef for the Equation (1) indicative of a system efficiency evaluation will be higher as the overall throughput of the system is higher and the overall power consumption of the system is lower. This evaluation value Ef is important especially for a system, for example, a Sensor Net, for which lower power consumption is required.

The Sensor Net is a generic term meaning a network system where a network is formed by deploying a large number of small nodes, each equipped with a sensor, a power supply, and a wireless communication function, and sensed information is transfer to a management system or a Web site on the Internet via the network. The Sensor Net is expected to be applied in fields such as building monitoring, environment monitoring, security, and commodity distribution, etc.

Here, as the power supply of a node, a battery or self-power generator is often used and required in many applications. As the power supply, for example, if a battery is used, frequent replacement of the battery is problematic in maintenance and operation of a node. In the case of self-power generator, its power supply capacity is often small and operation with lower power consumption is inevitable. Lower power consumption is important especially for the wireless communication function that consumes a large portion of power consumption of a node.

Meanwhile, each node has to perform efficient wireless transmission of sensed information to a base station or the network. Therefore, each node is required to perform efficient data transmission with reduced power consumption. As an index for realizing this, the value of Ef indicating the amount of data transfer per power consumption which is expressed by Equation (1) becomes important. For aninefficientsystem with a lower index value of Ef, the lifespan of the battery of a node is very short and the range of system applications is narrowed. That is, for a system like a Sensor Net, it is important to build a high efficiency wireless system having a higher index value of Ef.

The ALOHA, CSMA, and TDMA methods are compared here as wireless communication protocols being selectable in the present invention.

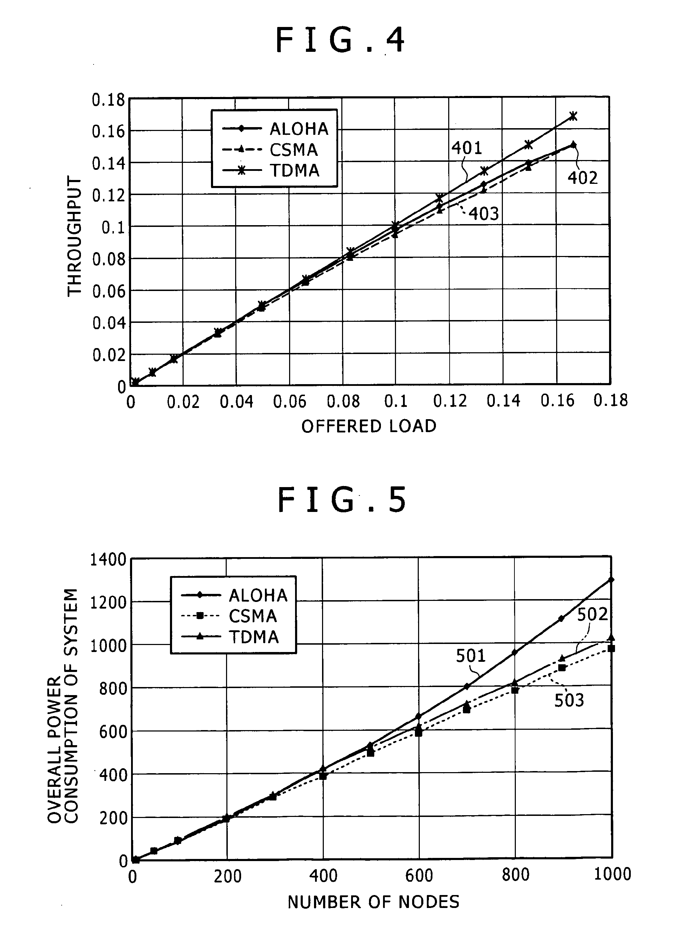

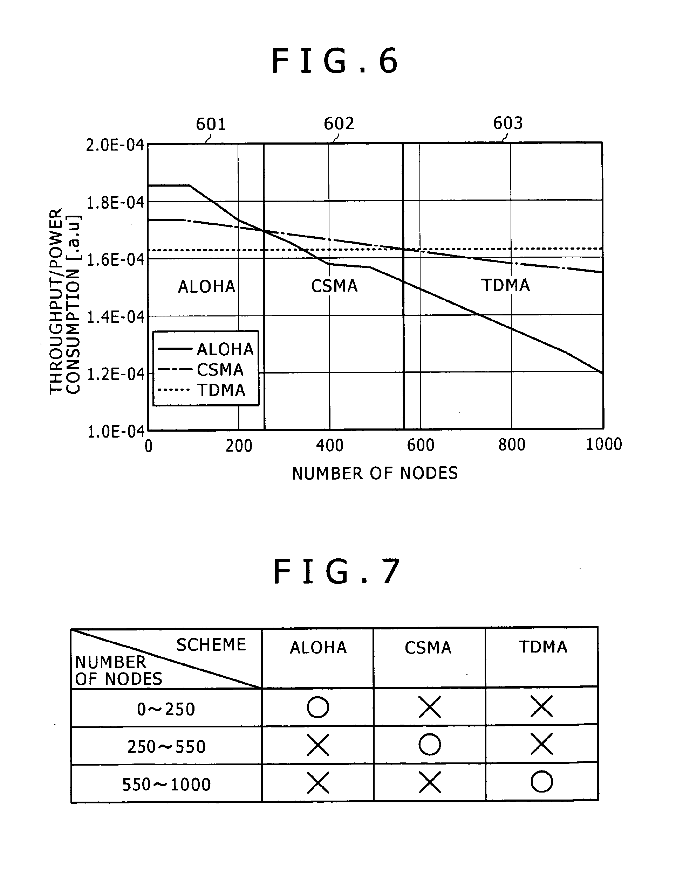

Simulation results of power consumptions of the overall systems are shown in FIG. 4, wherein the power consumptions vary depending on the number of nodes managed by base stations. Simulation results of the overall throughputs of these systems are shown in FIG. 5. FIG. 6 shows simulation results evaluated by Equation (1). From the simulation results of FIG. 6, it is apparent that the efficiencies of the systems vary depending on the number of nodes to be managed.

The index value of Ef expressed by Equation (1) has a close relationship with the number of nodes to be managed by the base station. As the number of nodes increases, the number of requests for packet transmission (offered load) increases proportionally and the probability of packet loss at the nodes increases. Thus, it is possible to evaluate Equation (1) with the number of nodes in advance, providing any of a management server, a base station, and a node with a table indicating the results of the evaluation, and select a wireless communication protocol based on the values held in this table.

The index value of Equation (1) can be replaced by, for example, retransmit count, BER, or PER. When mutual interference between nodes increases, noise power becomes larger, resulting in an increase of BER or PER. Thus, the efficiency of each system can be evaluated in terms of BER or PER. Moreover, since the retransmit count increases with an increase of PER, the efficiency of each system can be also evaluated in terms of retransmit count. To implement these evaluations, conceivable three possible patterns are node initiative, basic station initiative, and management server initiative.

Retransmit count, BER, and PER can be measured at each of nodes and base stations. By transmitting retransmit count, BER, and PER from a base station to a management server, it is also possible to measure these parameters at the management server. Therefore, a wireless communication protocol to be applied can be changed by any of nodes, base stations, and the management server, taking an initiative role.

However, as implied from the comparison of the ALOHA, CSMA, and TDMA, switching to the TDMA must be performed by a base station initiative. This is because, in the case of the TDMA system, the base station must allocate time slots to each node and each node cannot perform protocol switching autonomously. On the other hand, switching to the CSMA or ALOHA may be carried out by either a node or the base station. This is because the essential difference between the CSMA and the ALOHA is whether carrier sense is performed or not, and the overall operation of the system can be maintained even if, for example, a node performs protocol switching autonomously. In the following, embodiments will be described with regard to three types of wireless communication protocol switching different in initiative device.

Embodiment 1

As a first embodiment, a method of node device initiative wireless communication protocol switching is described. Here, ALOHA and CSMA are prepared as switchable wireless communication protocols. Both the ALOHA and CSMA do not require for a plurality of node devices to switch to an alternative one at the same time in the whole system. The ALOHA and CSMA methods allow each node device to carry out scheduling by itself without being instructed from the base station.

A wireless communication system shown in FIG. 2 is comprised of a management server 201, a plurality of base stations (202, 203), and nodes (204, 205, 206). Transmission data from nodes are transmitted wirelessly to the base stations and each base station transfers the received data to the management server 201. The management server 2 transfers the data received from the base station to a Web site on the Internet.

In the case of node initiative wireless communication protocol switching, any node can select either ALOHA or CDMA as the protocol to be applied for communication with its associated base station and start communication in accordance with the selected protocol. Therefore, there is no overhead by the protocol switching in this case.

In order to directly apply the index value Ef expressed by Equation (1) to the node initiative protocol switching, the base station has to notify the nodes of information as to the index value Ef so that each node can recognize the index value Ef. This is because each node cannot obtain the information on the system throughput by itself. In this case, overhead due to the communication of the throughput-related information occurs between the base station and the nodes. This results in a disadvantage such that overhead adversely affects the index value Ef.

Therefore, in the first embodiment, some parameter should be used to evaluate environmental communication circumstances more straightforwardly as compared with the evaluation according to Equation (1). As such parameter, for example, packet retransmit count at each node, the number of times (busy count) of detecting another node in communication detected by carrier sense, etc. may be considered applicable. The packet retransmit count is a parameter value that each node can count by itself. Likewise, the busy count detected by carrier sense is a parameter value that each node can measure by itself without the help from the base station. Since these parameter values can be measured at the base station side, base station initiative protocol switching is also possible.

Here, an example in which packet retransmit count measured at each node is used as a measure of evaluating the throughput per power consumption indicated by Equation (1) will be discussed. Packet retransmit count is proportional to packet loss. As the reasons of packet loss occurrence, conceivable two reasons are propagation loss due to that the node of interest is far from the base station, and loss caused by collision of packets transmitted from two or more nodes simultaneously.

The rate at which the former packet loss is likely to occur is constant because this loss is independent of the number of other nodes existing around the node of interest. However, the latter packet loss varies over time because it is dependent on the number of other nodes existing around the node of interest. Therefore, by monitoring a temporal variation in the packet retransmit count, the cause of packet loss can be conjectured. For example, when a node operating in accordance with the ALOHA method has detected the increase in packet loss due to packet collision, the system efficiency can be improved by switching the protocol to the CSMA.

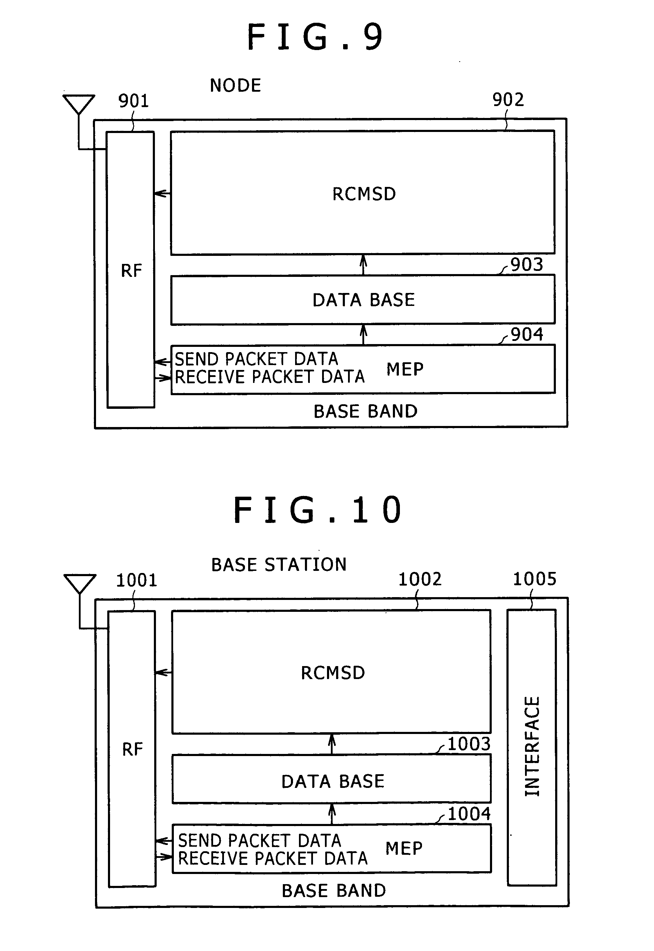

FIG. 9 shows a structural diagram of a node (204 to 206) .

The node comprises a wireless unit (Radio Frequency unit) 901, a wireless communication protocol selecting unit (RCMSD) 902, a database unit 903, and a communication processing unit (MEP) 904. The wireless unit 901 transmits and receives data to and from the associated base station according to a wireless communication protocol selected by the wireless communication protocol selecting unit 902. In the wireless communication protocol selecting unit 902, a control program for allowing the wireless unit 901 and the wireless processing unit 904 to operate selectively under either of ALOHA and CDMA. The communication processing unit 904 issues a protocol switching (program switching) instruction to the wireless communication protocol selecting unit 902 based on received information and packet retransmit count (the number of times of retransmission within a predetermined period) from the wireless unit 901 and protocol switching conditions or the like stored in the database unit 903. In the database unit 903, the switching conditions for switching, for example, from ALOHA to CSMA when packet retransmit frequency has exceeded a threshold are stored, for example, as the correspondence of the retransmit counts with the available protocols. The communication processing unit 904 can determine a wireless communication protocol tobe applied by measuring the packet retransmit frequency and referring to the database.

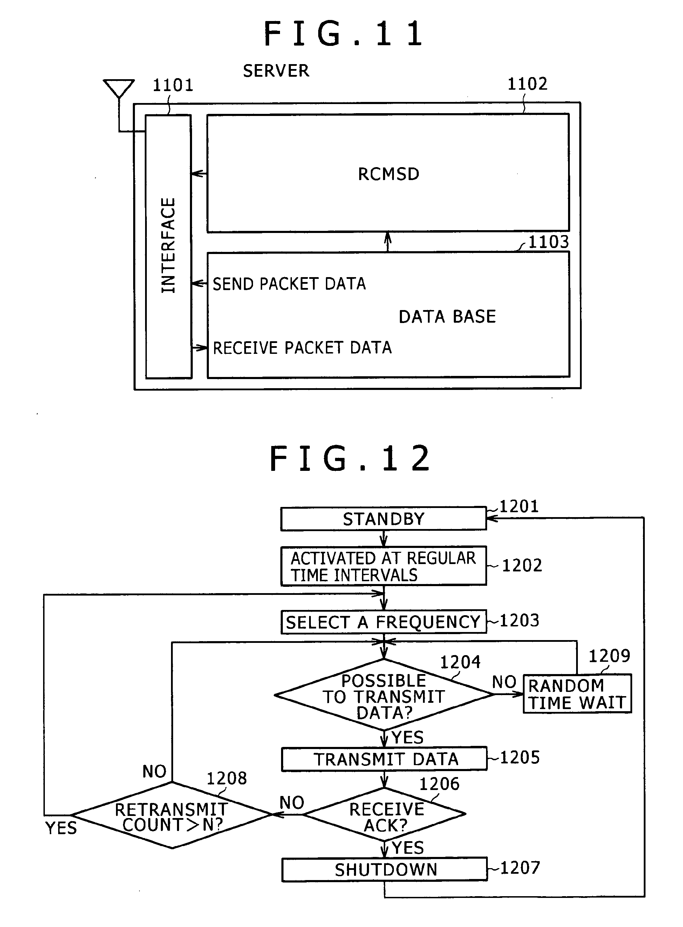

FIG. 12 shows a flowchart of basic operation of a conventional node according to the CSMA in a mobile communication system having three cells repeat pattern arrangement.

The node enters a standby state at its power-on (1201) and is activated periodically at regular time intervals (1202). The node selects one of frequencies of three available channels (1203) and judges whether data transmission is possible or not, by carrying out a carrier sense to confirm the status of data transmission by the other nodes (1204). As a result of the carrier sense, if a busy state was detected while another node is transmitting data, the node waits for an elapse of random time (1209). After that, the node judges again whether data transmission is possible or not (1204).

If it was judged that none of the other nodes is transmitting data, the node performs wireless data transmission (1205), and waits for receiving an ACK packet transmitted from the base station in response to the transmission packet (1206). If no ACK packet was received within a predetermined time, the node increments the packet retransmit count. If the retransmit count is less than or equal to a predetermined threshold value N, the node judges again whether data transmission is possible or not (1204). If the retransmit count has exceeded the predetermined threshold value N, the node changes the frequency to be applied at Step 1203 and judges whether data transmission is possible or not (1204). When an ACK packet was received within the predetermined time, the node returns to the standby mode (1201) because the data transmission from the node to the base station has been completed.

Basic operation flow of the node according to the ALOHA is one that excludes the step (1204) of determining whether data transmission is possible or not by the carrier sense and the step (1209) of waiting when the busy state is detected, from the flowchart of FIG. 12.

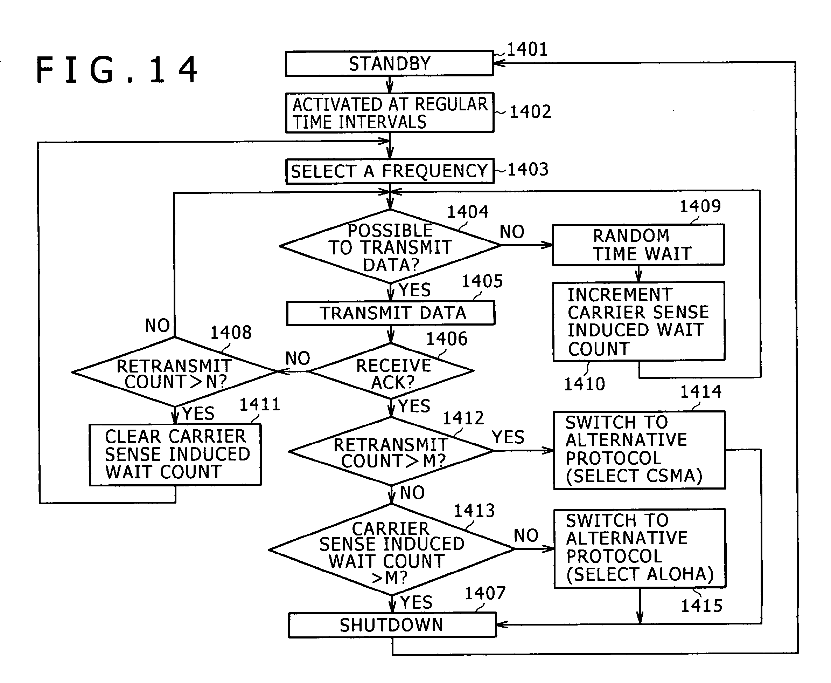

Next, basic operation of a node in the first embodiment of the invention will be described with reference to FIG. 14. The node enters a standby state at its power-on (1401) and is activated periodically at regular time intervals (1402). The node selects one of frequencies of three available channels (1403) and judges whether data transmission is possible or not by carrying out a carrier sense to confirm the status of data transmission by the other nodes (1404). As a result of the carrier sense, if it is in the busy state, the node waits for an elapse of random time (1409). In the present embodiment, after the elapse of random time, the node increments the count of waiting in the busy state (1410) and returns to Step 1404 of determining whether data transmission is possible or not.

If it was judged that none of the other nodes is transmitting data, the node performs wireless data transmission (1405) and waits for receiving an ACK packet from the base station (1406). If no ACK packet was received within a predetermined time, the node increments the packet retransmit count (1408). If the retransmit count is less than or equal to a predetermined threshold value N, the node judges again whether data transmission is possible or not (1404). If the retransmit count has exceeded the threshold value N, the node clears the carrier sense induced wait count which has been counted until now (1411), changes the frequency to be used at Step 1403, and judges whether data transmission is possible or not (1404).

When an ACK packet was received, the node is placed in the standby mode (1401) because the data transmission from the node to the base station has been completed. At this time, the communication processing unit compares the retransmit count for data transmission as well as the carrier sense induced wait count with predetermined values, respectively (1412, 1413) and issues a protocol switching instruction to the wireless communication protocol selecting unit (1414, 1415).

The CSMA method generally offers a better throughput performance under various environments than the ALOHA method. However, since the ALOHA method does not perform carrier sense control, it provides a better system efficiency than the CSMA in terms of power consumption. In the case where the number of nodes is small, there is no significant difference in throughput performance between the ALOHAmethod and CSMAmethod. As the number of nodes increases, packet loss increases and throughput decreases in the ALOHA method. There is also a possibility that power consumption due to an increased number of packet retransmissions becomes more than the saved power estimated by omitting the carrier sense control.

Thus, in order to improve the system efficiency, it is advisable to switch from the ALOHA to the CSMA when:

"Power consumption by carrier sense control < Power consumption by packet retransmissions"

The communication environment may be improved during communication under the CSMA and, conversely, there is a possibility that power consumption due to packet retransmissions occurring in the ALOHA becomes less than the power consumption for the carrier sense control.

"Power consumption by carrier sense control >

Power consumption by packet retransmissions"

In this case, it is advisable to reversely switch from the CSMA method to the ALOHA method so that the system efficiency can be improved. In order to realize such protocol switching, therefore, control may be carried out as follows.

The communication processing unit 704 reads out parameters for calculation from the database unit 703 and calculates the power consumptions due to the carrier sense control and the packet retransmissions, from these parameters, the carrier sense count, and the retransmit count. Based on the calculation result, the communication processing unit 704 issues a protocol switching instruction to the wireless communication protocol selecting unit 702. The wireless communication protocol selecting unit selects a program corresponding to the protocol specified by the instruction, from the previously prepared communication protocol programs for CSMA and ALOHA.

FIG. 10 shows a structural diagram of the base station (202, 203). The base station is comprised of a wireless unit (RF) 1001, a wireless communication protocol selecting unit (RCMSD) 1002, a communication processing unit (MEP) 1004, a database unit 1003, and a wired interface 1005.

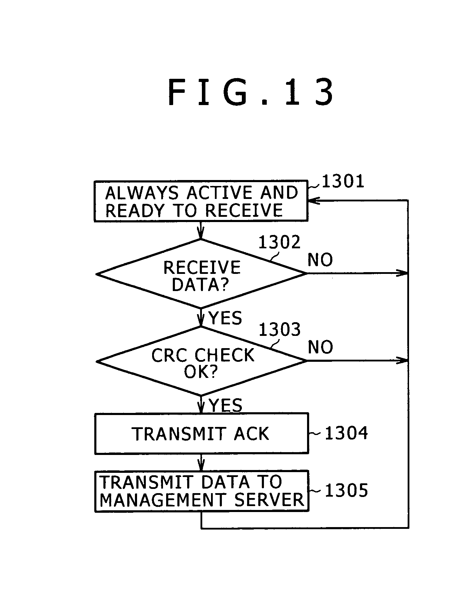

FIG. 13 shows a flowchart of basic operation of the base station.

The base station is always in a ready to receive state (1301). Upon receiving a packet from a node (1302), the base station checks a Cyclic Redundancy Check (CRC) of the received packet to determine whether the reception is successful (1303). When a CRC error occurs, the packet is discarded. If no error occurs in the CRC, the base station transmits an ACK packet to the source node of the packet (1304) and transmits the received data to the management server through the wired interface (1305). In the case of node initiative applicable protocol switching (between ALOHA and CSMA), there is no need for the base station side to perform protocol switching.

FIG. 11 shows a structure of a management server 201.

The management server is provided with a wired interface 1101 and a database unit 1103. Upon receiving data from a base station through the wired interface 1101, the management server stores the received data into the database unit 1003 or transmits the received data to another device connected via the network.

In the case of node initiative wireless communication protocol switching, as illustrated in the present embodiment, applicable protocols are limited to those that are switchable by each node in an autonomous manner, such as ALOHA and CSMA.

Although packet retransmit count is used as the index to determine protocol switching in the foregoing description, indices other than the packet retransmit count can be used if they are parameters with which the amount of data transfer per power consumption and the number of nodes under the management of a base station are derived directly or indirectly. For example, Receive Signal Strength Index (RSSI), Bit Error Rate (BER), Packet Error Rate (PER), a ratio of failed transmission count to successful transmission count, etc. can be used as the index. Each value of BER and PER is calculated by a calculating formula according to a wireless communication method for a physical layer.

Embodiment 2

As a second embodiment, base station initiative protocol switching will be described. In the case of base station initiative protocol switching, more protocol types are applicable. For example, wireless communication protocols such as TDMA, BTMA, and ISMA methods, in which each node transmits packets in accordance with an instruction or synchronization information from the base station, can be added to selectable protocols.

In this case, for protocol switching, the base station has to send a protocol switching instruction to each node. Accordingly, overhead for communication for this purpose occurs, but the system can achieve enhanced control as a whole because it becomes possible to handle statistic information in the whole system in the case of base station initiative.

In similar to the case for the first embodiment, the base station in the present embodiment comprises a wireless unit (RF) 1001, a wireless communication protocol selecting unit (RCMSD) 1002, a database unit 1003, a communication processing unit (MEP) 1004, and a wired interface 1005, as shown in FIG. 10. The wireless unit 1001 transmits and receives data in accordance with a program for a wireless communication protocol which is currently selected from among the programs corresponding to the wireless communication protocols provided in the wireless communication protocol selecting unit 1002.

In the wireless communication protocol selecting unit 1002, a plurality of protocol programs for selectively operating the wireless unit 1001 and the wireless processing unit 1004 in accordance with one of different wireless communication protocols are prepared. The communication processing unit 1004 issues a protocol switching (program switching) instruction to the wireless communication protocol selecting unit 1002 based on received information and the number of nodes under management of the base station as well as protocol switching conditions or the like stored in the database unit 1003. In the database unit 1003, the wireless communication protocol switching conditions or the like are stored, and the communication processing unit 1004 can determine a protocol to be applied by referring to the database unit 1003.

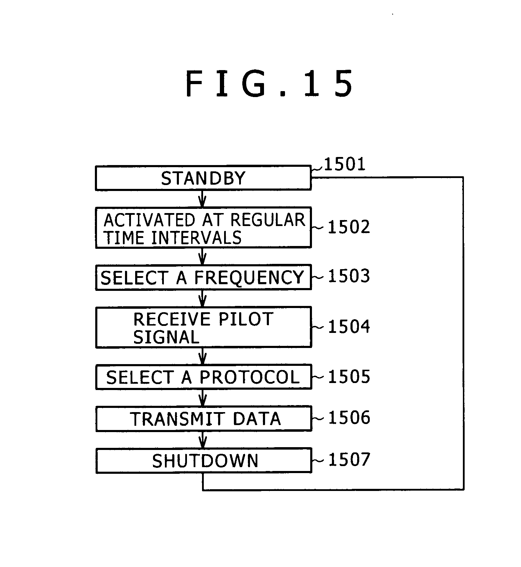

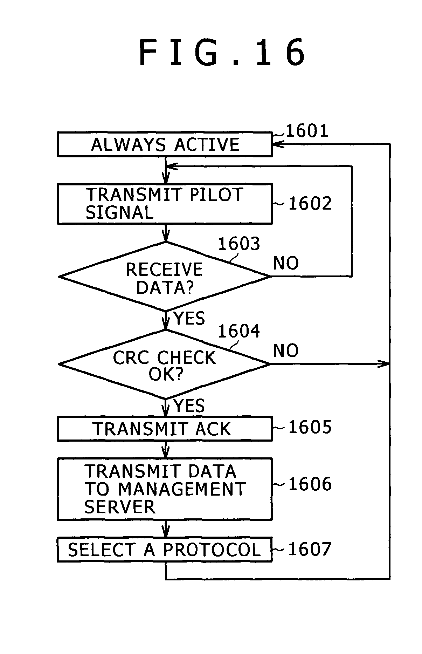

A flowchart illustrating basic operation of a node in the present embodiment is shown in FIG. 15 and a flowchart illustrating basic operation of the base station is shown in FIG. 16.

As shown in FIG. 15, each node is in the standby state (1501), and activated periodically at regular time intervals (1502). The node selects one of the frequencies of three available channels (1503) and attempts to receive a pilot signal transmitted from the base station (1504). Upon receiving a pilot signal, the node selects a protocol specified by the received pilot signal (1505), transmits data (1506), shuts down the power (1507), and returns to the standby state again.

Here, data transmission (1506) is performed in accordance with the selected protocol. The base station can make use of the amount of data transfer per power consumption, expressed by Equation (1), as a measure of the efficiency of a wireless communication protocol.

FIG. 6 shows simulation results of the information transfer efficiencies of ALOHA (601), CSMA (602), andTDMA (603), with the number of nodes managed by the base station plotted on the abscissa and the index value Ef according to Equation (1) plotted on the ordinate. Based on the evaluation result, it is possible to determine an optimum wireless communication protocol in accordance with the number of nodes under management of the base station, and the number of nodes to be used as a threshold for protocol switching, thereby to create a table for protocol switching.

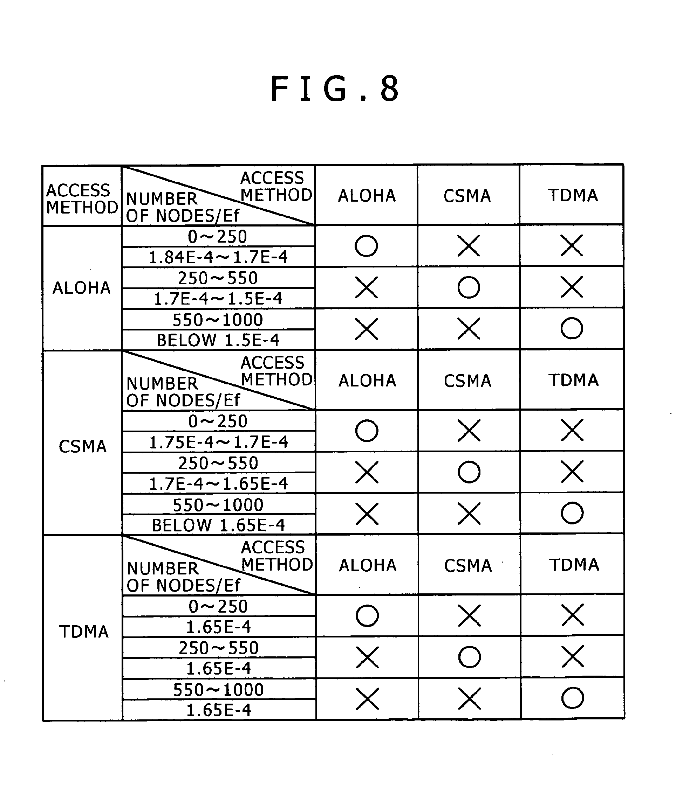

Examples of tables for protocol switching are shown in FIG. 7 and FIG. 8.

FIG. 7 shows a table for applicable protocol switching according to the number of nodes. Based on the simulation results of FIG. 6, this protocol switching table indicates that, within the range up to 1000 nodes, the access method to be selected is the ALOHA if the number of nodes falls between 0 and 250, the CSMA if the number of nodes falls between 250 and 550, and the TDMA if the number of nodes falls between 550 and 1000.

FIG. 8 shows a table for wireless communication protocol switching according to the protocol currently applied, the number of nodes, the index Ef of throughput per power consumption. Based on the simulation results of FIG. 6, this table indicates that, within the range up to 1000 nodes and when the currently applied protocol is the ALOHA, the ALOHA is maintained if the number of nodes falls between 0 and 250 and the Ef value falls between 1.85E-4 and 1.7E-4, the protocol is switched to the CSMA if the number of nodes falls between 250 and 550 and the Ef value falls between 1.7E4 and 1.5E-4, and the protocol is switched to the TDMA if the number of nodes falls between 550 and 1000 and the Ef value is below 1.5E-4.

In a similar manner, when the protocol currently applied is the CSMA or the TDMA, as well, a wireless communication protocol to be selected is specified according to the number of nodes and the Ef value. By referring to this table, therefore, it is able to determine whether the currently used protocol should be switched to another protocol and what protocol should be selected.

At a base station, the communication processing unit 1004 stores a terminal ID notified from each node in the database unit 1003 in order to recognize the number of nodes under its management. In the database unit 1003, the protocol switching table shown in FIG. 7 is retained beforehand. Depending on the number of nodes known from the terminal IDs, the communication processing unit 1004 determines from the above protocol switching table, an optimum wireless communication protocol to be applied for communication with the nodes.

The communication processing unit 1004 notifies the wireless communication protocol selecting unit 1002 of the determined wireless communication protocol. A protocol switching instruction from the base station to each node may be issued, for example, by setting information instructive protocol switching in an ACK packet to be returned when a node accesses the base station. At each node having received the ACK packet, the communication processing unit 904 analyzes the protocol switching instruction and issues a switching instruction to the wireless communication protocol selecting unit 902 so as to select a protocol in accordance with the instruction from the base station.

In the TDMA method, the base station always transmits a Pilot signal necessary for synchronization. Thus, in the case of switching the current protocol to the TDMA, the operation of the base station is switched to the TDMA mode for transmitting the Pilot signal so that each node can establish synchronization by receiving the Pilot signal, and thereafter transmit and receive packets in synchronization with the base station. The management server 201 does not need to execute specific operation with respect to the present embodiment, in similar to the case for the first embodiment.

As other evaluation methods for directly or indirectly deriving the amount of information transfer per power consumption and the number of nodes under management of the base station, following methods are exemplified. Although following methods have differences in detecting operations and evaluation methods for determining protocol switching, a protocol switching instruction from the base station to each node may be issued in the same manner as described above.

At the base station, the communication processing unit 802 acquires, based on the packets received from each node, data representing packet transmit counts (including retransmit counts) at each node, packet receive counts, and the total sum of packets received by the base station. Based on the data, the communication processing unit 802 calculates, in real time, the overall power consumption for all nodes and the overall throughput for all nodes as expressed in Equation (1). For example, these values can be calculated as follows:

"Overall throughput for all nodes = the total sum of packets received by the base station / Σ transmit counts"

"Overall power consumption for all nodes = transmitting power × Σ transmit counts + receiving power × Σ receive counts"

From the value Ef of Equation (1) and the number of nodes under the management of the base station, the base station determines a wireless communication protocol to be applied, according to the table which is shown in FIG. 8 and retained beforehand in the database unit 1008. If protocol switching is required, the base station gives to each node an instruction for switching to the selected wireless communication protocol by using the pilot signal or ACK packet. Then, the communication processing unit 1002 of the base station acquires various parameters (transmit counts, receive counts) and stores them into the database unit 1003.

Next, an example will be described on a case where the base station performs wireless communication protocol switching based on BER. The communication processing unit 1002 calculates the S/N ratio based on the transmitting power at each node extracted from received packet data and the radio signal receive level at the base station acquired from the RF unit 1001. A calculating formula for BER is derived beforehand from Equation (2) for each communication protocol. The communication processing unit 1002 calculates the value of BER based on this calculating formula, selects an optimum wireless communication protocol when the BER exceeds a predetermined threshold value, and issues a protocol switching instruction to the wireless communication protocol selecting unit 1004 and each node.

$$Erfc(x) = \frac{2}{\sqrt{\pi}} \int_{x}^{\infty} \exp(-\mu^2) du \qquad (2)$$

Next, an example will be described on a case of evaluation using PER. In the case of wireless communication protocol switching based on PER, the PER can be obtained from the BER and packet length. Accordingly, a calculating formula for PER is derived beforehand. The communication processing unit 1002 can obtain the value of PER by calculating a signal power to noise power ratio (S/N) based on the transmitting power at each node extracted from packet data received from the node and the radio signal receive level at the base station acquired from the RF unit 1001, in the same manner as the case for the BER. The communication processing unit 1002 selects a wireless communication protocol when the PER exceeds a predetermined threshold, and issues a protocol switching instruction to the wireless communication protocol selecting unit 1004 and each node.

Embodiment 3

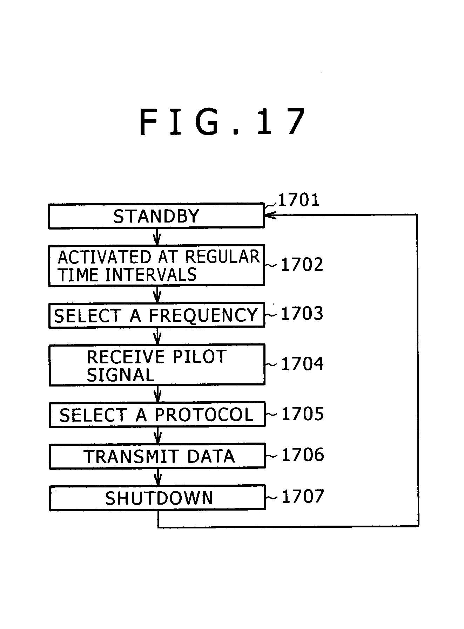

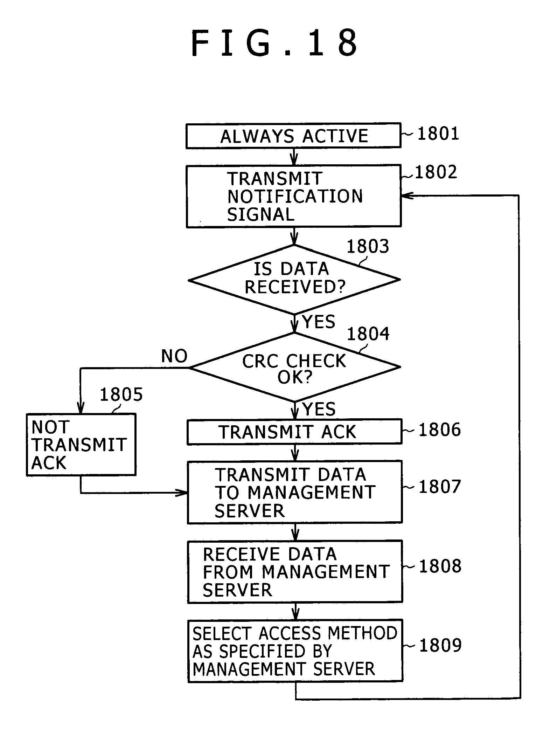

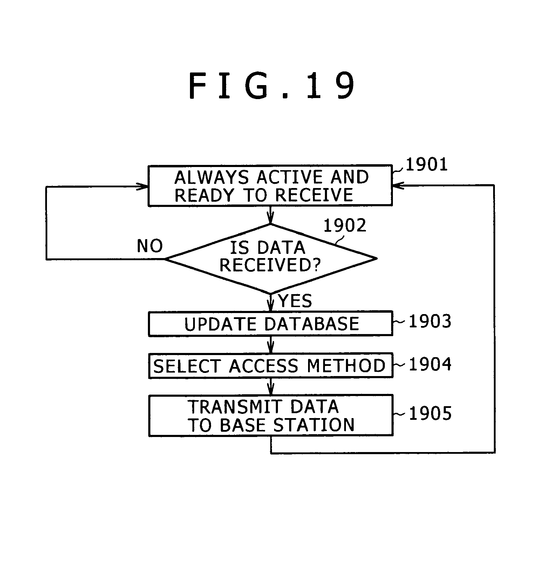

As a third embodiment of the invention, management server initiative wireless communication protocol switching will be described. In the case of management server initiative wireless communication protocol switching, the load on a base station can be reduced. The flowcharts of the basic operations of a node, base station, and management server in the present embodiment are shown in FIG. 17, FIG. 18, and FIG. 19, respectively.

At the base station, the communication processing unit 1002 acquires data representing packet transmit counts (including retransmit counts) and packet receive counts at each node and the total sum of received packets at the base station and sends these data to the management server through the interface 1005. The management server receives these data by the interface 1101 and the communication processing unit 1102 calculates, in real time, the overall power consumption for all nodes and the overall throughput for all nodes as expressed in Equation (1), based on the received data. For example, these can be calculated as follows:

"Overall throughput for all nodes = the total sum of packets received / $\Sigma$ transmit counts"

"Overall power consumption for all nodes = transmitting power $\times$ $\Sigma$ transmit counts + receiving power $\times$ $\Sigma$ receive counts"

From the value of Equation (1) and the number of nodes managed by the base station, the management server switches to a wireless communication protocol based on the results shown in FIG. 6. In similar to the case for Embodiment 2, the management server retains beforehand the results of FIG. 6 in a form of a table in the database unit 1003. Then, the management server notifies the base station of the selected wireless communication protocol as a notification signal through the interface 1101.

When the base station receives the notification of the wireless communication protocol through the interface 1005, the wireless communication protocol selecting unit 1002 selects a program corresponding to the above wireless communication protocol and performs wireless communication protocol switching by activating that program. In the same manner as noted in Embodiment 2, the base station notifies each node of the protocol switching.

As evaluation methods for directly or indirectly deriving the amount of data transfer per power consumption and the number of nodes under management of the base station, for example, Bit Error Rates (BER) or Packet Error Rates (PER) for the communication between the base station and the nodes may be used.

INDUSTRIAL APPLICABILITY

By dynamically switching to a wireless communication protocol adaptively in accordance with the change in communication environmental, the wireless communication system according to the present invention can realize wireless communication with higher system throughput and lower power consumption.

## Claims

**1.** A wireless communication system comprising a plurality of node devices each communicative with a base station, using one of a plurality of wireless communication protocols, and the base station which communicates with the plurality of node devices,
wherein each of said node devices and said base station carry out communication, using a wireless communication protocol selected based on an evaluation of efficiency of communication between the node devices and the base station.

**2.** The wireless communication system according to claim 1,
wherein each of said node devices evaluates said efficiency of communication based on a retransmit count of transmission packets.

**3.** The wireless communication system according to claim 1,
wherein said base station evaluates said efficiency of communication based on the number of node devices under management of the base station.

**4.** The wireless communication system according to claim 1,
wherein said base station evaluates said efficiency of communication, using packet transmit counts from said plurality of node devices under management of the base station and receive counts of packets transmitted from the node devices.

**5.** The wireless communication system according to claim 1, wherein said base station evaluates said efficiency of communication based on error rates for packets received from said plurality of node devices.

**6.** The wireless communication system according to claim 1, further comprising a management server connected to said base station, wherein said management server evaluates said efficiency of communication based on the error rates for packets transmitted from said plurality of node devices and received by the base station or a combination of the packet transmit counts at the plurality of node devices under management of said base station and the receive counts of packets from the node devices at said base station.

**7.** The wireless communication system according to claim 1, wherein said efficiency of communication is the amount of data transfer per power consumption for communication at said node devices.

**8.** A node device communicative with a base station by selectively applying one of a plurality of wireless communication protocols, comprising:

a wireless unit;
a communication processing unit; and
a wireless communication protocol selecting unit,
wherein packet transmission from said wireless unit to said base station is controlled using a wireless communication protocol selected based on an evaluation of efficiency of communication with said base station.

**9.** The node device according to claim 8, wherein said communication processing unit detects a retransmit count of transmission packets, and said wireless communication protocol selecting unit evaluates said efficiency of communication based on the retransmit count detected, and selects a wireless communication protocol to be used.

**10.** The node device according to claim 8, wherein said wireless communication protocol selecting unit selects said wireless communication protocol based on information indicative wireless communication protocol switching received from said base station.

**11.** The node device according to claim 8, wherein said efficiency of communication is the amount of data transfer per power consumption for communication at the node device.

**12.** A base station communicative with a plurality of node devices by selectively applying one of a plurality of wireless communication protocols, comprising:

a wireless unit;
a communication processing unit; and
a wireless communication protocol selecting unit,
wherein said wireless unit receives packets from said node devices, using a wireless communication protocol selected based on an evaluation of efficiency of communication with said node devices.

**13.** The base station according to claim 12, further comprising a database unit in which a table for evaluating said efficiency of communication is stored, said table correlating applicable wireless communication protocols and the number of node devices under management of the base station, wherein said communication processing unit detects the number of node devices under management of the base station, selects one of said wireless communication protocols based on said table and said detected number of node devices, and instructs said wireless communication protocol selecting unit to switch to the selected protocol.

**14.** The base station according to claim 12, further comprising:

a database unit in which a table correlating applicable wireless communication protocols and efficiency of communication is stored,
wherein said wireless communication protocol selecting unit refers to said table and selects one of said wireless communication protocols based on the evaluation of efficiency of communication.

**15.** The base station according to claim 14,
wherein saidcommunicationprocessing unit evaluates said efficiency of communication based on receive counts of packets from said plurality of node devices at the base station and packet transmit counts from the plurality of node devices, notified from said plurality of node devices.

**16.** The base station according to claim 12, further comprising:

a communication interface for communicating with a management server,
wherein the number of node devices under management of the base station or the receive counts of packets transmitted from said plurality of node devices and received by the base station and the packet transmit counts from the plurality of node devices, notified from said plurality of node devices, are notified to saidmanagement server through the communication interface, and said wireless communication protocol is selected based on information for wireless communication protocol switching notified from said management server.

**17.** The base station according to claim 12,
wherein information of said selected wireless communication protocol is transmitted as information for wireless communication protocol switching to said plurality of node devices.

**18.** The base station according to claim 12,
wherein said efficiency of communication is the amount of data transfer per power consumption for communication at the node devices.

FIG. 1

FIXED-LINE NETWORK
101
MOBILE COMMUNICATION SWITCH
102
SWITCH
103
LOCATION REGISTERING SERVER
104
BS
105
BS
106
107
NODE 1
NODE 2

FIG. 2

INTERNET
201
SERVER
202
BS
203
BS
SIGNAL POWER
INTERFERE POWER
204
205
206
NODE 1
NODE 2
NODE 3
NOISE POWER

FIG.3A
ALOHA
6ms6ms
301
NODE 1
NODE 2
NODE 3
302
BS
LOST PACKET
PACKET
TIME
FIG.3B
CSMA
303
NODE 1
NODE 2
NODE 3
304
BS
PROHIBIT SEND
PACKET
TIME
FIG.3C
TDMA
305
NODE 1
NODE 2
NODE 3
306
BS
LOST PACKET
PACKET
TIME

# FIG.4

ALOHA
CSMA
TDMA
401
402
403
THROUGHPUT
0.18
0.16
0.14
0.12
0.1
0.08
0.06
0.04
0.02
0
0.02
0.04
0.06
0.08
0.1
0.12
0.14
0.16
0.18
OFFERED LOAD

# FIG.5

ALOHA
CSMA
TDMA
501
502
503
OVERALL POWER CONSUMPTION OF SYSTEM
1400
1200
1000
800
600
400
200
0
200
400
600
800
1000
NUMBER OF NODES

# FIG. 6

601
602
603
2.0E-04
1.8E-04
1.6E-04
1.4E-04
1.2E-04
1.0E-04
THROUGHPUT/POWER CONSUMPTION [.a.u]
ALOHA
CSMA
TDMA
ALOHA
CSMA
TDMA
0
200
400
600
800
1000
NUMBER OF NODES

# FIG. 7

| SCHEME / NUMBER OF NODES | ALOHA | CSMA | TDMA |
|---|---|---|---|
| 0～250 | ○ | × | × |
| 250～550 | × | ○ | × |
| 550～1000 | × | × | ○ |

# FIG. 8

| ACCESS METHOD | NUMBER OF NODES/Ef \ ACCESS METHOD | ALOHA | CSMA | TDMA |
|---|---|---|---|---|
| ALOHA | 0～250<br>1.84E-4～1.7E-4 | ○ | × | × |
| | 250～550<br>1.7E-4～1.5E-4 | × | ○ | × |
| | 550～1000<br>BELOW 1.5E-4 | × | × | ○ |
| CSMA | NUMBER OF NODES/Ef \ ACCESS METHOD | ALOHA | CSMA | TDMA |
| | 0～250<br>1.75E-4～1.7E-4 | ○ | × | × |
| | 250～550<br>1.7E-4～1.65E-4 | × | ○ | × |
| | 550～1000<br>BELOW 1.65E-4 | × | × | ○ |
| TDMA | NUMBER OF NODES/Ef \ ACCESS METHOD | ALOHA | CSMA | TDMA |
| | 0～250<br>1.65E-4 | ○ | × | × |
| | 250～550<br>1.65E-4 | × | ○ | × |
| | 550～1000<br>1.65E-4 | × | × | ○ |

FIG. 9

NODE
901
902
RCMSD
RF
903
DATA BASE
904
SEND PACKET DATA
RECEIVE PACKET DATA
MEP
BASE BAND

FIG. 10

BASE STATION
1001
1002
1005
RCMSD
RF
1003
DATA BASE
INTERFACE
1004
SEND PACKET DATA
RECEIVE PACKET DATA
MEP
BASE BAND

FIG. 11

SERVER
1101
1102
RCMSD
1103
INTERFACE
SEND PACKET DATA
DATA BASE
RECEIVE PACKET DATA

FIG. 12

STANDBY
1201
ACTIVATED AT REGULAR TIME INTERVALS
1202
SELECT A FREQUENCY
1203
1204
POSSIBLE TO TRANSMIT DATA?
NO
1209
RANDOM TIME WAIT
YES
TRANSMIT DATA
1205
NO
1208
1206
RETRANSMIT COUNT > N?
NO
RECEIVE ACK?
YES
YES
SHUTDOWN
1207

# FIG. 13

ALWAYS ACTIVE AND READY TO RECEIVE
1301
1302
RECEIVE DATA?
NO
YES
1303
CRC CHECK OK?
NO
YES
TRANSMIT ACK
1304
TRANSMIT DATA TO MANAGEMENT SERVER
1305

FIG. 14
1401 STANDBY
1402 ACTIVATED AT REGULAR TIME INTERVALS
1403 SELECT A FREQUENCY
1404 POSSIBLE TO TRANSMIT DATA?
YES
NO
1405 TRANSMIT DATA
1406 RECEIVE ACK?
YES
NO
1407 SHUTDOWN
1408 RETRANSMIT COUNT>N?
YES
NO
1409 RANDOM TIME WAIT
1410 INCREMENT CARRIER SENSE INDUCED WAIT COUNT
1411 CLEAR CARRIER SENSE INDUCED WAIT COUNT
1412 RETRANSMIT COUNT>M?
YES
NO
1413 CARRIER SENSE INDUCED WAIT COUNT >M?
YES
NO
1414 SWITCH TO ALTERNATIVE PROTOCOL (SELECT CSMA)
1415 SWITCH TO ALTERNATIVE PROTOCOL (SELECT ALOHA)

FIG.15

STANDBY
1501
ACTIVATED AT REGULAR TIME INTERVALS
1502
SELECT A FREQUENCY
1503
RECEIVE PILOT SIGNAL
1504
SELECT A PROTOCOL
1505
TRANSMIT DATA
1506
SHUTDOWN
1507

FIG.16

ALWAYS ACTIVE
1601
TRANSMIT PILOT SIGNAL
1602
1603
RECEIVE DATA?
NO
YES
1604
CRC CHECK OK?
NO
YES
TRANSMIT ACK
1605
TRANSMIT DATA TO MANAGEMENT SERVER
1606
SELECT A PROTOCOL
1607

FIG. 17

STANDBY
1701
ACTIVATED AT REGULAR TIME INTERVALS
1702
SELECT A FREQUENCY
1703
RECEIVE PILOT SIGNAL
1704
SELECT A PROTOCOL
1705
TRANSMIT DATA
1706
SHUTDOWN
1707

# FIG. 18

ALWAYS ACTIVE
1801
TRANSMIT NOTIFICATION SIGNAL
1802
IS DATA RECEIVED?
1803
YES
CRC CHECK OK?
1804
NO
1805
NOT TRANSMIT ACK
YES
TRANSMIT ACK
1806
TRANSMIT DATA TO MANAGEMENT SERVER
1807
RECEIVE DATA FROM MANAGEMENT SERVER
1808
SELECT ACCESS METHOD AS SPECIFIED BY MANAGEMENT SERVER
1809

FIG. 19

ALWAYS ACTIVE AND READY TO RECEIVE
1901
IS DATA RECEIVED?
1902
NO
YES
UPDATE DATABASE
1903
SELECT ACCESS METHOD
1904
TRANSMIT DATA TO BASE STATION
1905

**INTERNATIONAL SEARCH REPORT**

International application No.
PCT/JP2004/002822

A. CLASSIFICATION OF SUBJECT MATTER
Int.Cl[7] H04B7/26

According to International Patent Classification (IPC) or to both national classification and IPC

B. FIELDS SEARCHED

Minimum documentation searched (classification system followed by classification symbols)
Int.Cl[7] H04B7/24-7/26, H04Q7/00-7/38, H04L12/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2002-064871 A (Communications Research Laboratory),<br>28 February, 2002 (28.02.02),<br>Par. Nos. [0010] to [0046], [0086] to [0109], [0121] to [0129]; Figs. 1 to 5<br>(Family: none) | 1,3,8,10,<br>12-14,16,17<br>2,4-7,9,11,<br>15,18 |
| X<br><br>Y | JP 08-274788 A (NEC Corp.),<br>18 October, 1996 (18.10.96),<br>Par. Nos. [0006] to [0008], [0017] to [0020];<br>Figs. 2 to 4<br>& EP 744849 A2 & EP 736988 A2<br>& US 5740167 A | 1,3,5,8,10,<br>12,17<br>2,4,6,7,9,<br>11,13-16,18 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>01 June, 2004 (01.06.04) | Date of mailing of the international search report<br>22 June, 2004 (22.06.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/002822

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2003-198564 A (NEC Corp.),<br>11 July, 2003 (11.07.03),<br>Par. Nos. [0012], [0086] to [0109], [0059] to [0068]; Figs. 1 to 3<br>& US 2003/0125087 A1 | 1,3,8,12<br>2,4-7,9-11,<br>13-18 |
| X<br>Y | JP 11-289575 A (Nippon Telegraph And Telephone Corp.),<br>19 October, 1999 (19.10.99),<br>Par. Nos. [0015] to [0024]; Figs. 1 to 2<br>(Family: none) | 1,5,8,12<br>2-4,6,7,<br>9-11,13-18 |
| X<br>Y | JP 2000-069040 A (Nippon Telegraph And Telephone Corp.),<br>03 March, 2000 (03.03.00),<br>Par. Nos. [0037] to [0053]; Figs. 1 to 2<br>(Family: none) | 1,8,12<br>2-7,9-11,<br>13-18 |
| Y | Mitsutoshi MATSUDA et al., "Multi Media Eisei Tsushin System ni Okeru Eisei Kaisen Access Hoshiki no Kento", The Institute of Electronics, Information and Communication Engineers Gijutsu Kenkyu Hokoku SAT98-4 | 2,4,6,9,15,<br>16 |
| Y | JP 2002-185458 A (Matsushita Electric Industrial Co., Ltd.),<br>28 June, 2002 (28.06.02),<br>Par. Nos. [0004] to [0006]<br>(Family: none) | 3,7,11,13,<br>16,18 |
| E,X | JP 2004-112180 A (Fuji Xerox Co., Ltd.),<br>08 April, 2004 (08.04.04),<br>Par. Nos. [0029] to [0053]; Figs. 1 to 4<br>(Family: none) | 1,5,7,8,10,<br>11,12,17,18 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002064871 A
- JP 2002247049 A